# FASCICULE DE BREVET EUROPEEN

(11) **EP 3 717 213 B1**
(45) Date de publication et mention de la délivrance du brevet: **04.05.2022**
(21) Numéro de dépôt: 18819175.3
(22) Date de dépôt: 23.11.2018
(51) Int. Cl.: B29C 70/38, B29C 70/54

(54) **TETE D'APPLICATION COMPRENANT UN SYSTEME DE COUPE ET UN SYSTEME DE BLOCAGE MOBILES**
AUFTRAGSKOPF MIT EINEM BEWEGLICHEN SCHNEIDSYSTEM UND EINEM BEWEGLICHEN BLOCKIERSYSTEM
APPLICATION HEAD COMPRISING A MOVABLE CUTTING SYSTEM AND A MOVABLE BLOCKING SYSTEM

(30) Priorité: 27.11.2017 FR 1701246
(43) Date de publication de la demande: 07.10.2020
(73) Titulaire: Coriolis Group, 56530 Quéven (FR)
(72) Inventeur: GAILLARD, Loïc, 56600 Lanester (FR); COUDURIER, Julien, 56100 Lorient (FR)
(86) Numéro de dépôt international: PCT/FR2018/000257
(87) Numéro de publication internationale: WO 2019/102084

(56) Documents cités:
- EP-A1- 0 846 551
- DE-A1-102015 224 689
- FR-A1- 3 011 499

## Description

La présente invention se rapporte à une tête d'application spécialement conçue pour réaliser des pièces en matériaux composites, et plus particulièrement une tête d'application de fibres équipée d'un système de coupe et d'un système de blocage particuliers. La présente invention concerne également un procédé de fabrication de pièces en matériaux composites au moyen d'une tête d'application correspondante.

Il est connu des machines d'application de fibre pour l'application au contact sur un outillage de drapage, tel qu'un moule mâle ou femelle, d'une fibre ou d'une bande large formée d'une ou plusieurs fibres plates continues, de type mèches, sèches ou imprégnées de résine thermodurcissable ou thermoplastique, notamment des fibres de carbone, constituées d'une multitude de fils ou filaments de carbone.

Ces machines d'application de fibre, appelées également machines de placement de fibre, comprennent classiquement une tête d'application, un système de déplacement apte à déplacer la tête d'application, des moyens de stockage pour stocker les fibres et des moyens d'acheminement pour acheminer les fibres des moyens de stockage jusqu'à la tête d'application. Cette dernière comprend classiquement un rouleau d'application pour l'application d'une bande formée de plusieurs fibres sur une surface d'application d'un outillage de drapage, un système de guidage pour guider les fibres sous la forme d'une bande vers le rouleau d'application, et pour chaque fibre, un système de coupe pour couper une fibre, des moyens de réacheminement pour réacheminer la fibre jusqu'au rouleau d'application des fibres coupées par un système de coupe, et des moyens de blocage pour bloquer la fibre venant d'être coupée.

Le système de coupe comprend un premier outil de coupe mobile en translation suivant une direction de coupe entre une position inactive et une position active pour couper une fibre, et un deuxième outil de coupe.

Le système de blocage comprend un premier outil de blocage mobile en translation suivant une direction de blocage entre une position inactive et une position active pour bloquer une fibre et un deuxième outil de blocage.

Le document WO 2017/072421 décrit une tête d'application de ce type, dans laquelle le système de coupe comprend une lame mobile et une lame fixe ou contre-lame, la fibre étant coupée par cisaillement lors du déplacement de la lame par rapport à la contre-lame. Ces systèmes de coupe permettent un nombre plus important de coupes avant de devoir être remplacés. Par ailleurs, ces systèmes de coupe permettent d'effectuer une coupe de type guillotine, en utilisant des lames avec un bord de coupe incliné pour couper progressivement la fibre et ainsi réduire l'effort de coupe. Le système de coupe occupe une position fixe dans la tête d'application suivant le plan de guidage de la fibre. Il en va de même du système de blocage.

Un tel agencement conduit à la constatation selon laquelle l'extrémité coupée d'une fibre peut présenter une inclinaison par rapport à la direction longitudinale la fibre. Cette inclinaison s'explique par le fait que pendant l'intervalle de temps correspondant à la translation de l'outil de coupe, le rouleau d'application continue d'appliquer la fibre en train d'être coupée. L'inclinaison de l'extrémité coupée est d'autant plus forte que la fibre est plus large ou que l'intervalle de temps entre des positions inactives et des positions actives dudit outil ou desdits outils de coupe et de blocage est plus long.

Le document EP 846 551 divulgue une tête d'application dans laquelle un outil de coupe est mobile en translation suivant une direction de coupe et un contre-outil de coupe est fixe suivant ladite direction. La tête d'application comprend également un premier outil de blocage mobile suivant une direction de blocage et un contre-outil de blocage fixe suivant ladite direction. Lesdits outils de coupe et lesdits outils de blocage sont mobiles d'un seul bloc en translation suivant une direction de déplacement de la fibre. Le déplacement du système de coupe et du système de blocage avec la fibre en cours de drapage assure une bonne qualité de coupe, avec une extrémité coupée sensiblement perpendiculaire à la direction longitudinale de la fibre. Toutefois, les moyens de commande utilisés pour déplacer à la fois le système de coupe et le système de blocage s'avère encombrants, en raison de la masse importante à déplacer. Par ailleurs, les moyens de réacheminement doivent être disposés en amont des outils de blocage relativement au sens de défilement de la fibre, ce qui implique une distance de réacheminement de fibre importante entre le système de coupe et le rouleau, augmentant les risques de défauts d'acheminement, et pouvant affecter la précision de dépose.

Le document DE10201524689 A1 décrit une tête d'application de fibres selon le préambule de la revendication 1 et un procédé utilisant une telle tête d'application.

Le but de l'invention est de proposer une solution visant à pallier au moins l'un des inconvénients précités.

A cet effet, l'invention a pour objet une tête d'application spécialement conçue pour réaliser des pièces en matériaux composites, conformément à la revendication 1.

L'expression « ensemble » signifie que les outils de coupe conservent leur alignement suivant la direction de coupe pendant leur déplacement. Il en va de même des outils de blocage vis-à-vis de la direction de blocage.

Le déplacement ensemble des outils de coupe leur permet de se déplacer avec la fibre tout en se déplaçant suivant la direction de coupe. On parvient ainsi à réduire, voire annuler l'inclinaison du bord de coupe dans le cas d'une coupe de type guillotine. Par ailleurs, la différence de vitesse entre les outils de coupe et la fibre étant réduite, voire nulle, l'abrasion que subit les outils de coupe à cause du frottement de la fibre est réduite, ce qui permet de ralentir l'usure des lames. On déplacera les outils de coupe de préférence sensiblement à la même vitesse que celle du déplacement de la fibre par le rouleau d'application. Dans le cas particulier où les deux outils de coupe sont mobiles suivant la direction de coupe, la course desdits outils nécessaire pour couper la fibre sera réduite et la coupe atteinte plus rapidement. L'utilisation de moyens de commande séparés pour déplacer le système de coupe et le système de blocage avec le déplacement de la fibre permet d'utiliser un moyen de commande peu encombrant pour le système de coupe tout en limitant l'inclinaison du bord de coupe, et ainsi de proposer une tête présentant un encombrement réduit au voisinage du système d'application, utilisable pour le drapage sur des surfaces de géométries complexes, notamment à concavité importante. Par ailleurs, l'utilisation de moyens de commande séparés permet d'effectuer des déplacements relatifs entre le système de coupe et le système de blocage, et ainsi de proposer un premier moyen de commande spécifique de faible encombrement.

De tels moyens de commande séparés, permettent en outre de positionner des moyens de réacheminement de fibres entre le système de blocage et le système de coupe, et ainsi de proposer une tête d'application avec une distance de réacheminement de fibre réduite, limitant les risques de défauts de réacheminement, garantissant une bonne précision de dépose, et augmentant la vitesse de dépose, dans la mesure où la vitesse de drapage est généralement réduite lors du réacheminement pour garantir une qualité de dépose.

Selon un mode de réalisation, la tête selon l'invention comprend en outre, de préférence pour chaque fibre, des moyens de réacheminement pour réacheminer une fibre jusqu'au rouleau d'application après une coupe effectuée par le système de coupe, lesdits moyens de réacheminement étant de préférence disposés entre le système de blocage et le système de coupe.

Dans un mode de réalisation, ledit premier moyen de commande est un moyen de commande intégré apte à déplacer le premier outil de coupe en translation suivant la direction de coupe entre une position inactive et une position active, et à déplacer ensemble lesdits outils de coupe entre lesdites positions initiale et finale, de préférence à déplacer ensemble lesdits outils de coupe en rotation autour d'une direction parallèle à l'axe de rotation du rouleau d'application du système d'application entre lesdites positions initiale et finale.

Ledit moyen de commande intégré est apte à déplacer lesdits outils de coupe entre un premier état dans lequel les outils de coupe sont en position inactive et en position initiale et un deuxième état dans lequel les outils de coupe sont en position active et en position finale. Un moyen de commande intégré selon l'invention permet de réduire l'encombrement du système de coupe dans la tête de d'application tout en composant le mouvement en translation au moins du premier outil de coupe, suivant la direction de coupe, avec le mouvement pour déplacer les outils de coupe avec la fibre en cours d'application par le système d'application, de préférence un mouvement en rotation de ladite direction de coupe. Il convient de noter que cette rotation imprime à la fibre une légère déviation par rapport à une direction de translation de la fibre. Toutefois, cette déviation est maintenue dans des limites acceptables.

Dans ce mode de réalisation, les moyens de commande séparés selon l'invention pour déplacer le système de coupe et le système de blocage avec le déplacement de la fibre donne la possibilité, après une opération de coupe, d'écarter l'extrémité coupée de la fibre des outils de coupe dans le deuxième état précité, en manœuvrant les outils de blocage en position initiale et en position active vers leur position finale et position active, de sorte que les outils de coupes puissent être par la suite manœuvrés vers leur deuxième état précité, sans risquer de bloquer ou déformer l'extrémité coupée de la fibre, et donc sans risquer d'altérer son réacheminement ultérieur.

Selon un mode de réalisation, le moyen de commande intégré est apte à déplacer le premier outil de coupe et le deuxième outil de coupe en translation suivant la direction de coupe entre des positions inactives et des positions actives.

Avantageusement, le moyen de commande intégré comprend un levier de commande mobile autour d'un premier axe de rotation et pourvu d'un premier bras de levier articulé à un premier porte-outil porteur du premier outil de coupe et d'un deuxième bras de levier articulé, par l'intermédiaire d'une biellette, à un deuxième porte-outil porteur du deuxième outil de coupe, ledit deuxième bras de levier étant commandé en déplacement par une tige de vérin, ledit premier porte-lame étant articulé à un deuxième axe de rotation par l'intermédiaire d'une biellette et lesdits premier et deuxième porte-outils étant reliés entre eux par un moyen de liaison en coulissement suivant la direction de coupe.

Dans cet agencement, les premier et deuxième outils de coupe sont déplacés en translation suivant la direction de coupe. Le moyen de liaison en coulissement garantit que l'alignement des outils de coupe suivant la direction de coupe est conservé pendant leur déplacement ensemble, en rotation.

Dans un autre mode de réalisation, ledit premier moyen de commande ensemble des outils de coupe est un moyen de commande en translation suivant le plan de guidage.

De préférence, les premier et deuxième outils de coupe sont mobiles l'un et l'autre suivant la direction de coupe et un moyen de commande apte à les déplacer comprend un vérin actionnant une tige de vérin coopérant avec lesdits outils de coupe par l'intermédiaire d'un cône de transmission ou de premier et deuxième leviers reliés respectivement auxdits premier et deuxième outils de coupe.

De préférence, le premier outil de coupe comprend une première lame pourvue d'un biseau définissant un premier bord de coupe et le deuxième outil de coupe comprend une deuxième lame pourvue d'un biseau définissant un deuxième bord de coupe, lesdits biseaux étant opposés pour permettre un chevauchement desdits bords de coupe.

Par cet agencement, on réduit voire élimine le risque de déformer la fibre lors de la coupe. Dans le cas de fibres pré-imprégnées, on réduit voire élimine le risque de coller la fibre sur l'un ou l'autre outil de coupe mobile. On parvient ainsi à couper une fibre « au milieu », c'est-à-dire sans déviation par rapport au plan de guidage défini par les moyens de guidage.

Par cet agencement également, on ralentit l'usure des outils de coupe dans le temps, puisque l'effort de coupe est réparti sur les deux outils.

Les bords de coupe des deux lames peuvent être rectilignes, curvilignes ou encore présenter une ligne brisée, par exemple en V.

Des bords de coupe rectilignes peuvent s'étendre parallèlement l'un par rapport à l'autre, de la position inactive à la position active des lames suivant la direction de coupe pour couper instantanément la fibre sur toute sa largeur.

De préférence, ils forment un angle de coupe constant, non nul, des positions inactives des lames à leurs positions active, une lame ou les deux lames présentant alors un bord de coupe incliné, le ou les bords de coupe formant un angle différent de 90° avec la direction de coupe, le ou les bords de coupe étant inclinés par rapport à une direction perpendiculaire à la direction de coupe. De préférence encore, la bissectrice de l'angle de coupe est perpendiculaire à la direction de coupe, les deux lames présentant alors un bord de coupe incliné.

Par cet agencement, on réduit l'intervalle de temps par rapport à ce qu'il était dans les systèmes de coupe antérieurs. En effet, le point de coupe défini par le sommet de l'angle de coupe se propage plus rapidement à l'intersection des bords de coupe lorsque les lames sont mobiles l'une et l'autre suivant la direction de coupe. Par cet agencement également, on parvient à couper des bandes larges de fibres avec un effort de coupe réduit.

Pour couper une fibre « au milieu », c'est-à-dire sans déviation de la fibre par rapport au plan de guidage, on fixera les lames par rapport à des porte-lames de façon telle que la bissectrice de l'angle de coupe soit contenue dans le plan de guidage de la fibre et on déplacera les porte-lames à une même vitesse de translation pour maintenir la bissectrice dans ce plan, des positions inactives aux positions actives des lames.

Dans un autre mode de réalisation, ledit deuxième moyen de commande des outils de blocage est un moyen de commande en translation suivant le plan de guidage.

Selon un mode de réalisation, le système de blocage comprend un troisième moyen de commande, distinct du deuxième moyen de commande, apte à déplacer un premier outil de blocage suivant une direction de blocage entre une position inactive et une position active.

De préférence, les premier et deuxième outils de blocage sont mobiles l'un et l'autre suivant la direction de blocage entre des positions respectives inactives et actives, ledit troisième moyen de commande est de préférence apte à déplacer le premier outil de blocage et le deuxième outil de blocage en translation suivant la direction de coupe entre les positions inactives et les positions actives. Ledit troisième moyen de commande comprend de préférence un vérin actionnant une tige de vérin coopérant avec lesdits outils de blocage par l'intermédiaire d'un cône de transmission ou de premier et deuxième leviers reliés respectivement auxdits premier et deuxième de blocage.

Par cet agencement, on augmente la vitesse de blocage par rapport à ce qu'elle était dans les systèmes de blocage antérieurs. En effet, les deux outils de blocage viennent plus rapidement en butée l'un contre l'autre dans leurs positions actives respectives lorsqu'ils sont mobiles l'un et l'autre en translation suivant la direction de blocage. La tête selon l'invention équipée d'un tel système de blocage facilite la synchronisation du système de coupe et du système de blocage et assure des extrémités coupées de fibre lors du drapage.

Cet agencement permet avantageusement de bloquer une fibre « au milieu », c'est-à-dire sans déviation par rapport à un plan médian disposé à égale distance des moyens de guidage. On choisira de préférence les positions inactives des deux outils de blocage de façon symétrique par rapport au plan médian et on déplacera lesdits outils en sens opposé à une même vitesse de translation pour les faire venir en butée l'un contre l'autre dans le plan médian.

Par cet agencement, on réduit ainsi le risque de déformer la fibre lors du blocage.

Avantageusement, la tête d'application comprend des moyens dévétisseurs fixes suivant la direction de blocage, dans des positions vis-à-vis desquelles lesdites positions inactives respectives des outils de blocage sont en retrait. Les moyens dévétisseurs comprennent deux plaques de dévétissage chacune munie d'un trou traversant pour le passage d'un outil de blocage, les deux surfaces en vis-à-vis des plaques de dévétissage sont espacées l'une de l'autre et sont dans des positions vis-à-vis desquelles les positions inactives des outils de blocage sont en retrait. Les positions inactives des outils de blocage en retrait par rapport aux moyens dévétisseurs permettent de décoller facilement une fibre qui serait restée collée aux outils de blocage en butée l'un contre l'autre dans leurs positions actives respectives. Ainsi, on réduit voire élimine le risque de coller la fibre sur l'un ou l'autre outil de blocage mobiles, en particulier dans le cas de fibres pré-imprégnées.

De préférence, le deuxième moyen de commande apte à déplacer ensemble lesdits outils de blocage est également apte à déplacer les moyens dévétisseurs, en translation suivant le plan de guidage.

La présente invention a également pour objet un procédé de fabrication d'une pièce en matériau composite comprenant l'application de fibres continues sur une surface d'application, conformément à la revendication 11.

Les fibres classiquement utilisées sont des fibres plates continues, appelées également mèches, généralement unidirectionnelles, et comprenant une multitude de filaments. Les fibres déposées peuvent être des fibres sèches ou des fibres pré-imprégnées de résine thermodurcissable ou thermoplastique. Les fibres présentent typiquement des largeurs de 1/8, 1/4 ou 1/2 pouces. Dans la présente, le terme «fibre» désigne également des fibres de plus grande largeur, supérieure à 1/2 pouce, classiquement appelée bande dans la technologie du placement, par exemple de 1 pouce, 1,5 pouce ou 2 pouces. 1 pouce est équivalent à 2,54 centimètres.

D'autres avantages de l'invention apparaîtront à la lumière de la description de modes d'exécution illustrés par les dessins.
La Fig. 1 est une vue schématique d'une tête d'application selon un premier mode de réalisation de l'invention, illustrant un système de coupe et un système de blocage dans des positions initiales suivant un plan de guidage.
La Fig. 2 est une vue schématique de la tête d'application, dans laquelle les outils de coupe du système de coupe se sont déplacés dans une position finale dans ledit plan de guidage.
La Fig. 3 est une vue schématique de la tête d'application, dans laquelle les outils de blocage du système de blocage se sont déplacés dans une position finale dans ledit plan de guidage.
La Fig. 4 est une vue schématique de la tête d'application, dans laquelle les outils de coupe du système de coupe sont à nouveau dans la position initiale dans le plan de guidage.
La Fig. 5 est une vue schématique du système de coupe, illustrant les outils de coupe dans la position initiale suivant le plan de guidage et dans deux positions inactives suivant la direction de coupe.
La Fig. 6 est une vue schématique du système de coupe, illustrant les outils de coupe dans la position finale suivant le plan de guidage et dans deux positions actives suivant la direction de coupe.
La Fig. 7 est une vue schématique du système de blocage, illustrant les outils de blocage dans la position initiale suivant le plan de guidage et dans deux positions inactives suivant une direction de blocage.
La Fig. 8 est une vue schématique du système de blocage, illustrant les outils de blocage dans la position initiale suivant le plan de guidage et dans deux positions actives suivant la direction de blocage.
La Fig. 9 est une vue schématique du système de blocage, illustrant les outils de blocage dans la position finale suivant le plan de guidage et dans les positions actives suivant la direction de blocage.
La Fig. 10 est une vue schématique du système de blocage, illustrant les outils de blocage dans la position finale suivant le plan de guidage et dans les positions inactives suivant la direction de blocage.
La Fig. 11 est une vue partielle agrandie du système de coupe de la figure 5.
La Fig. 12 est une vue partielle agrandie du système de coupe de la figure 6.
La Fig. 13 est un agrandissement des moyens de coupe illustrés par la figure 5, en vue de dessus.
La Fig. 14 est un agrandissement des moyens de coupe illustrés par la figure 6, en vue de dessus.
La Fig. 15 est une vue schématique du système de blocage selon une variante de réalisation, illustrant les outils de blocage dans la position initiale suivant le plan de guidage et dans les positions inactives suivant la direction de blocage.
La Fig. 16 est une vue schématique du système de blocage, illustrant les outils de blocage dans la position initiale suivant le plan de guidage et dans les positions actives suivant la direction de blocage.

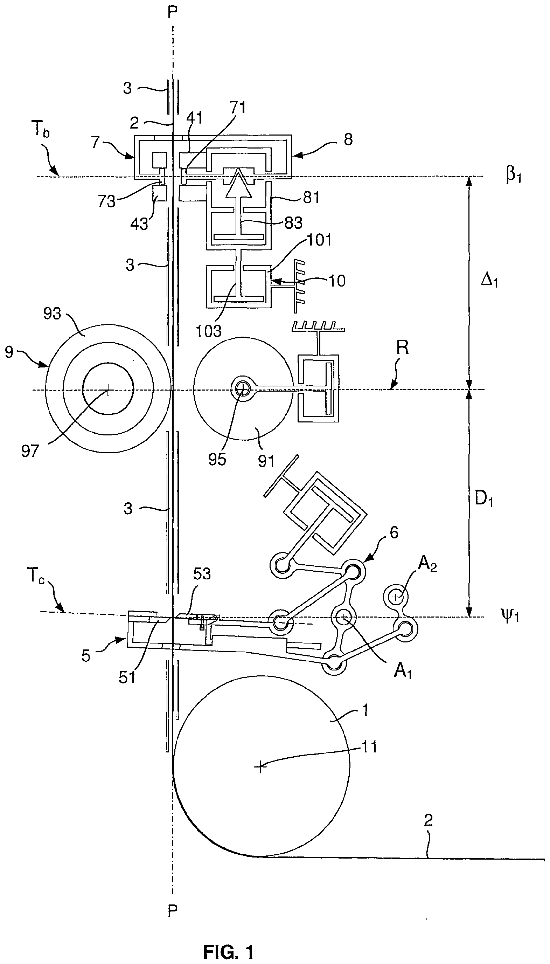

Selon un premier mode d'exécution de l'invention, illustré par les figures 1 à 14, une tête d'application comprend un rouleau d'application 1, et pour chaque fibre, des moyens de guidage 3 définissant un plan de guidage P pour guider la fibre entrant dans la tête selon un plan de guidage en direction du rouleau, un système de coupe 5, un système de blocage 7. Les moyens de guidage d'une fibre sont par exemple formés par un canal de guidage formé à l'interface d'assemblage de deux plaques, le plan de guidage correspondant à un plan longitudinal médian du canal. Lorsque la tête est prévue pour l'application d'une bande de plusieurs fibres, la tête comprend un canal de guidage par fibre et un système de coupe par fibre, et peut comprendre un seul rouleau pour appliquer toutes les fibres, ou plusieurs rouleaux, par exemple un rouleau pour chaque fibre. D'autres moyens de guidage peuvent comprendre des tronçons de tube ou une ou plusieurs poulies.

Le système de coupe 5 comprend des premier et deuxième outils de coupe 51, 53 mobiles en translation suivant une direction de coupe T_{c} entre deux positions inactives κ₁, κ₃ et deux positions actives κ₂, κ₄. Lesdits outils de coupe 51, 53 sont mobiles ensemble et déplacés par un premier moyen de commande 6, entre deux positions de coupe initiale ψ₁ et finale ψ₂ représentant une variation de distance suivant le plan de guidage P.

Le premier moyen de commande 6 est un moyen de commande intégré, apte à déplacer les premier et deuxième outils de coupe 51, 53 en translation suivant la direction de coupe T_{c} et à les déplacer ensemble entre les positions de coupe initiale ψ₁ et finale ψ₂, en rotation autour d'une direction parallèle à l'axe 11 du rouleau d'application 1 ledit moyen de commande intégré étant apte à déplacer les outils de coupe entre leurs positions inactives et initiale et leurs positions actives et finale.

Le moyen de commande intégré 6 comprend un levier de commande 61 mobile autour d'un premier axe de rotation A₁ et pourvu d'un premier 63 et d'un deuxième 65, 66 bras de levier. Un premier porte-lame 57 porteur de la première lame 51 est articulé au premier bras de levier 63. Un deuxième porte-lame 59 porteur de la deuxième lame 53 est articulé au deuxième bras de levier 65, 66 par l'intermédiaire d'une biellette 69. Le levier 61 est commandé en déplacement par la tige 67 d'un vérin, articulée au deuxième bras de levier 65, 66. Le premier porte-lame 57 est articulé à un deuxième axe de rotation A₂ par l'intermédiaire d'une biellette 60 et lesdits premier et deuxième porte-lames 57, 59 étant reliés entre eux par un moyen de liaison 68 en coulissement suivant la direction de coupe.

Les axes de rotation A₁ et A₂ sont fixes par rapport à une structure support de la tête d'application le vérin étant monté fixe par son corps de vérin à ladite structure support. A noter que la liaison entre la tige de vérin 67 du vérin et la biellette intermédiaire 66 peut possède un jeu, par exemple sous la forme d'une lumière oblongue. En variante, le vérin est monté avec un jeu par rapport à la structure support de montage.

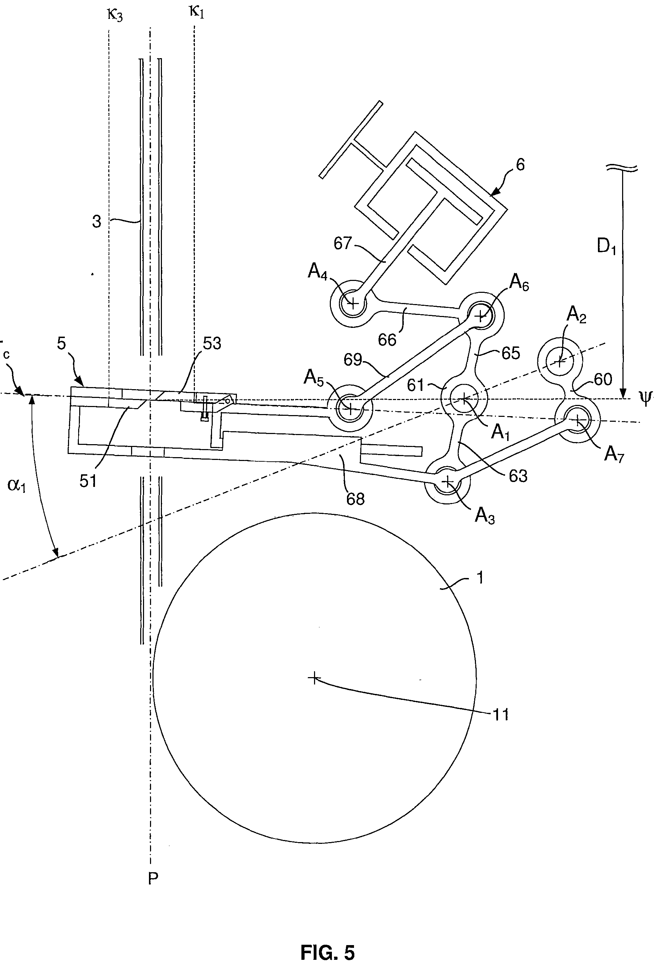

Les axes de rotation A₁ et A₂ sont parallèles au plan de guidage P et à l'axe de rotation 11 du rouleau de compactage. En référence à la figure 5, le premier bras de levier 63 est articulé par son extrémité au premier porte-lame 57 autour d'un axe de pivotement A₃, et le deuxième bras de levier est articulé par son extrémité à la tige de vérin autour d'un axe de pivotement A₄, les deux bras de levier forment un angle ente eux, les axes A₁, A₃ et A₄ n'étant pas compris dans un même plan. La biellette 69 est articulée par une première extrémité au deuxième porte-lame 59 autour d'un axe de pivotement A₅ et par sa deuxième extrémité au deuxième bras de levier autour d'un axe de pivotement A₆, cet axe de pivotement A₆ étant disposé entre l'axe A₁ et l'axe A₄, du côté du plan passant par les axes A₁ et l'axe A₄ qui est opposé à l'axe A₅. Dans le présent mode de réalisation illustré sur les figures, les axes A₁, A₃ et A₆ sont alignés, compris dans un même plan, et la distance entre les axes A₁ et A₃ est égale à la distance entre les axes A₁ et A₆. L'axe de rotation A₂ est disposé du côté du plan passant par les axes A₁ et A₃ qui est opposé aux lames et à l'axe A₅, la biellette 60 étant articulée par une extrémité autour de l'axe A₂ fixe, et par l'autre extrémité au premier porte-lame autour d'un axe de pivotement A₇ qui est disposé du même côté du plan passant par les axes A₁ et A₃ que l'axe A₂. Les axes de pivotement A₃-A₇ précités sont parallèles aux axes de rotation A₁ et A₂.

Le système de blocage 7 comprend des premier et deuxième outils de blocage 71, 73 mobiles suivant une direction de blocage T_{b} entre deux positions inactives θ₁, θ₃ et deux positions actives θ₂, θ₄ où ils sont en butée l'un contre l'autre. Lesdits outils de blocage comprennent un premier et un deuxième mors. Un moyen de commande 8 est apte à déplacer les premier et deuxième outils de blocage 71, 73 en translation suivant la direction de blocage T_{b}. Ce moyen comprend un vérin 81 actionnant une tige de vérin 83 coopérant avec les premier et deuxième outils de blocage 71, 73 par l'intermédiaire d'un cône de transmission 85.

Lesdits outils de blocage 71, 73 sont mobiles ensemble en translation entre deux positions de blocage initiale β₁ et finale β₂ représentant une variation de distance suivant le plan de guidage P. Ils sont déplacés par un deuxième moyen de commande 10 comprenant un vérin 101 actionnant une tige de vérin 103 apte à déplacer en bloc le vérin 81 du deuxième moyen de commande 8.

Des moyens dévétisseurs 41, 43 sont fixes par rapport à une structure servant de support au montage de la tête d'application et donc fixes l'un par rapport à l'autre suivant la direction de blocage T_{b}. Les positions inactives θ₁, θ₃ des premier 71 et deuxième 73 outils de blocage sont en retrait suivant la direction de blocage T_{b} par rapport aux positions fixes des moyens dévétisseurs 41, 43. Les moyens dévétisseurs 41, 43 sont mobiles avec lesdits outils de blocage 71, 73 en translation suivant le plan de guidage P et commandés en déplacement par ledit moyen de commande 10.

La tête d'application comprend également des moyens de réacheminement. Ces derniers comprennent un premier galet 91 et un deuxième galet 93 dont les axes de rotation 95 et 97 sont alignés suivant une direction R distante de l'axe de rotation 11 du rouleau d'application 1. Lesdits moyens de réacheminement 9 occupent une position fixe par rapport au rouleau d'application 1, entre lesdits outils de coupe 51, 53 d'une part et lesdits outils de blocage 71, 73 d'autre part.

Figure 1, les deux outils de coupe 51, 53 sont dans leur position initiale ψ₁ pour laquelle la distance suivant le plan de guidage P entre la direction de coupe T_{c} et la position fixe de moyens de réacheminement est égale à D₁. De même, les deux outils de blocage 71, 73 sont dans leur position initiale β₁ pour laquelle la distance suivant le plan de guidage P entre la direction de blocage T_{b} et la position fixe des moyens de réacheminement est égale à Δ₁. Suivant la direction de coupe T_{c}, les outils de coupe 51, 53 sont dans leurs positions inactives κ₁, κ₃. Suivant la direction de blocage T_{b}, les outils de blocage 71, 73 sont dans leurs positions inactives θ₁, θ₃.

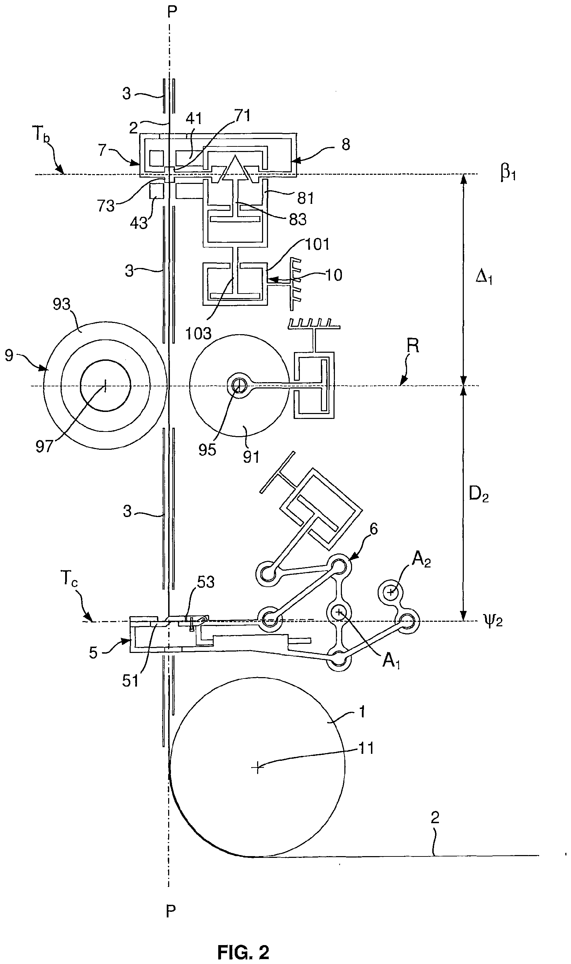

Figure 2, les deux outils de coupe 51, 53 se sont déplacés ensemble dans leur position finale ψ₂ pour laquelle la distance suivant le plan de guidage P entre la direction de coupe T_{c} et la position fixe de moyens de réacheminement est égale à D₂. Les deux outils de blocage 71, 73 sont restés dans la position initiale β₁ illustrée par la figure 1. Suivant la direction de coupe T_{c}, les outils de coupe 51, 53 se sont déplacés dans leurs positions actives κ₂, κ₄. Suivant la direction de blocage T_{b}, les outils de blocage 71, 73 se sont déplacés dans leurs positions actives θ₂, θ₄.

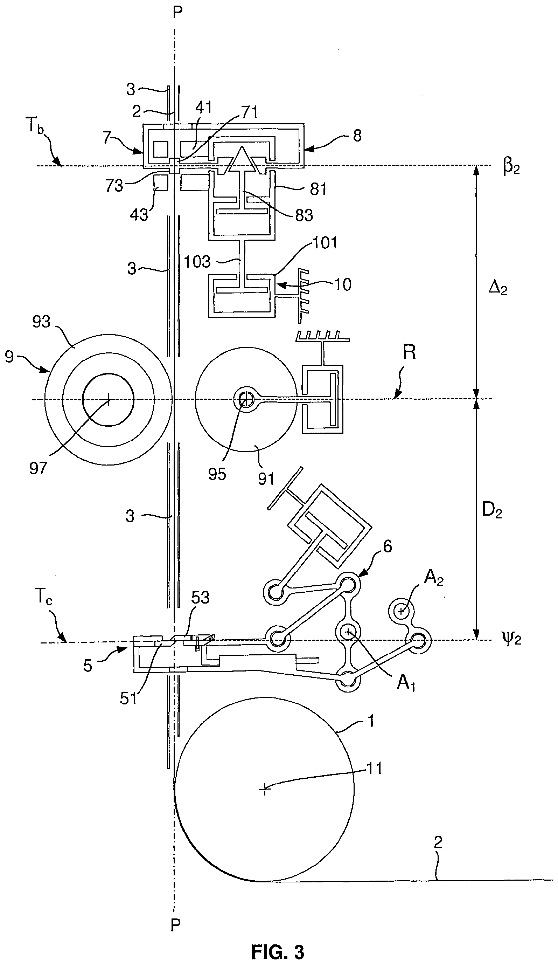

Figure 3, les deux outils de coupe 51, 53 sont restés dans leur position finale ψ₂ illustrée par la figure 2. Les deux outils de blocage 71, 73 se sont déplacés ensemble dans leur position finale β₂ pour laquelle la distance suivant le plan de guidage entre la direction de blocage T_{b} et la position fixe des moyens de réacheminement est égale à Δ₂.

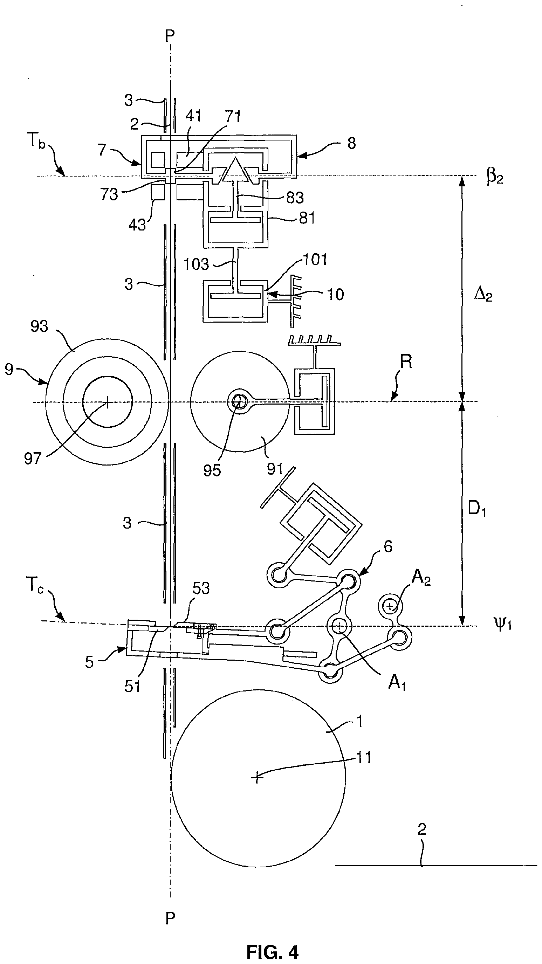

Figure 4, les deux outils de coupe 51, 53 se sont déplacés ensemble dans leur position initiale ψ₁ illustrée par la figure 1. Les deux outils de blocage 71, 73 sont restés dans leur position finale β₂ illustrée par la figure 3. Suivant la direction de coupe T_{c}, les outils de coupe 51, 53 se sont déplacés dans leurs positions inactives κ₁, κ₃.

Les distances initiales D₁ et Δ₁ sont inférieures aux distances finales D₂ et Δ₂. Ainsi, les positions de coupe initiale ψ₁ et finale ψ₂ représentent une variation positive de distance D₂ - D₁ suivant le plan de guidage P et les positions de blocage initiale β₁ et finale β₂ représentent une variation positive de distance Δ₂ - Δ₁ suivant le plan de guidage P.

Il importe de noter que la direction R des moyens de réacheminement est une référence arbitraire pour repérer les distances D₁, Δ₁, D₂ et Δ₂. La direction perpendiculaire au plan de guidage P et passant par l'axe 11 du rouleau d'application 1 est une autre référence arbitraire qui permet de repérer lesdites distances. Il suffit que la direction de référence soit perpendiculaire au plan de de guidage et occupe une position fixe dans la tête d'application.

Figure 5, les deux outils de coupe 51, 53 sont dans leur position initiale ψ₁ pour laquelle la distance suivant le plan de guidage P entre la direction de coupe T_{c} et la position fixe de moyens de réacheminement est égale à D₁. Lesdits outils 51, 53 sont dans les positions inactives κ₁, κ₃ suivant la direction de coupe T_{c}. La direction de coupe T_{c} fait un angle α₁ avec la direction passant par les axes de rotation A₁ et A₂. Cet angle ainsi que les positions inactives κ₁, κ₃ suivant la direction de coupe T_{c} sont déterminées par l'orientation angulaire du levier de commande 61, elle-même déterminée par la position rentrée de la tige de vérin 67.

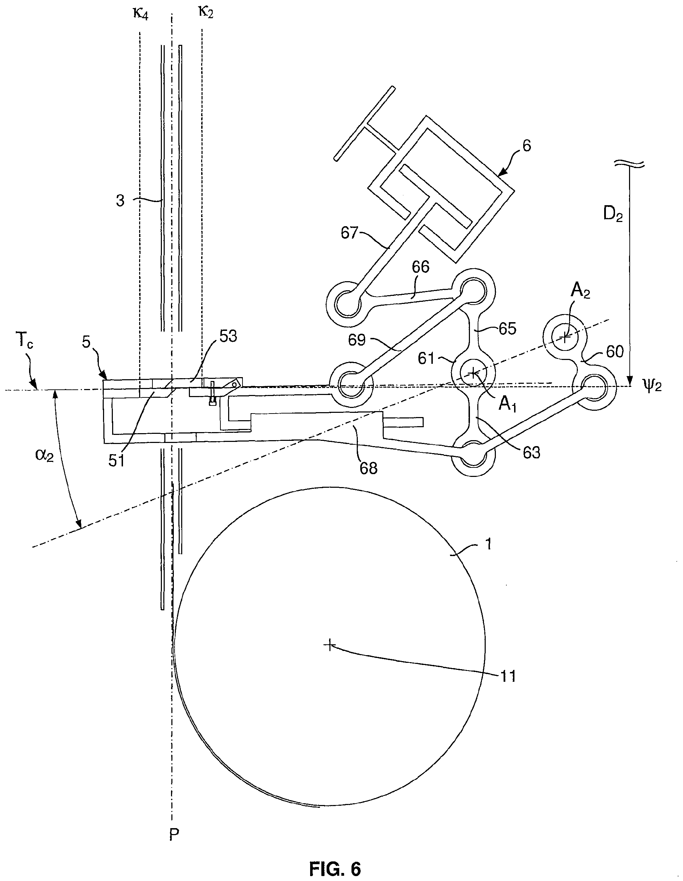

Figure 6, les deux outils de coupe 51, 53 se sont déplacés dans leur position finale ψ₂ pour laquelle la distance suivant le plan de guidage P entre la direction de coupe T_{c} et la position fixe de moyens de réacheminement est égale à D₂. Lesdits outils 51, 53 se sont également déplacés dans les positions actives κ₂, κ₄ suivant la direction de coupe T_{c}. La direction de coupe T_{c} fait un angle α₂ avec la direction passant par les axes de rotation A₁ et A₂. Cet angle ainsi que les positions actives κ₂, κ₄ suivant la direction de coupe T_{c} sont déterminées par l'orientation angulaire du levier de commande 61, elle- même déterminée par la position sortie de la tige de vérin 67.

Dans l'un α₁ ou l'autre α₂ des angles pris par la direction de coupe T_{c}, les outils de coupe 51, 53 restent alignés suivant ladite direction, ce que le moyen de liaison par coulissement 68 garantit.

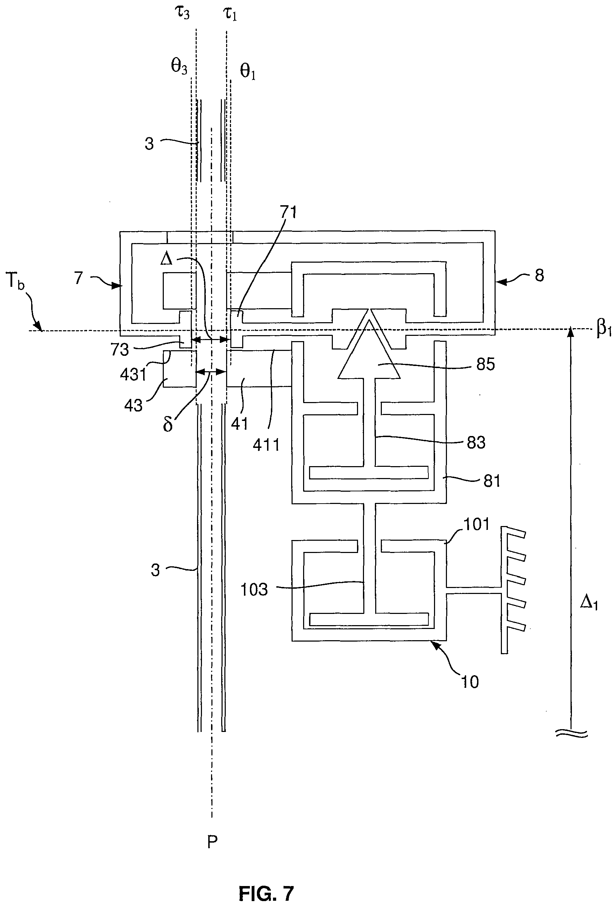

Figure 7, les deux outils de blocage 71, 73 sont dans leur position initiale β₁ pour laquelle la distance suivant le plan de guidage P entre la direction de blocage T_{b} et la position fixe des moyens de réacheminement est égale à Δ₁. Lesdits outils sont dans leurs positions inactives θ₁, θ₃ suivant la direction de blocage T_{b}, en retrait par rapport aux positions τ₁, τ₃ des moyens dévétisseurs 41, 43. Le retrait tient au fait que les moyens dévétisseurs sont distants d'une distance δ inférieure à la distance Δ entre lesdites positions inactives θ₁, θ₃ desdits outils de blocage 71, 73 suivant la direction de blocage T_{b}. Les moyens dévétisseurs comprennent une première plaque de dévétissage 41 munie d'un trou traversant 411 pour le passage du premier outil de blocage 71 et une deuxième plaque de dévétissage 43 munie d'un trou traversant 431 pour le passage du deuxième outil de blocage 73. Les deux plaques de dévétissage, parallèles entre elles, sont montées fixes sur le corps du vérin, les deux surfaces en vis-à-vis des plaques de dévétissage sont dans les positions τ₁, τ₃ et sont espacées l'une de l'autre de la distance δ.

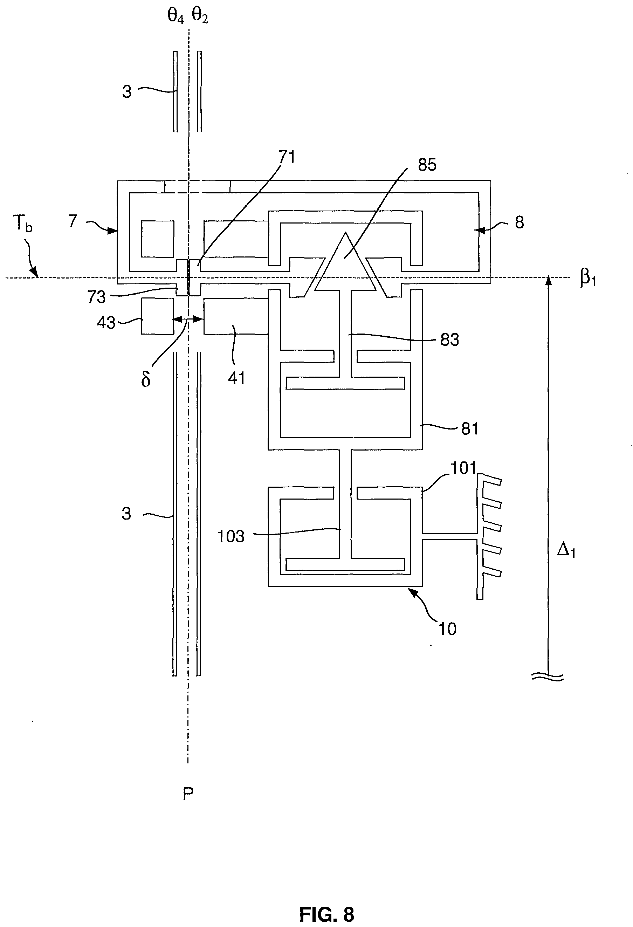

Figure 8, les deux outils de blocage 71, 73 sont restés dans la position initiale β₁ illustrée par la figure 1 mais se sont déplacés, suivant la direction de blocage T_{b}, de leurs positions inactives θ₁, θ₃ aux positions actives θ₂, θ₄ pour lesquelles ils sont en butée l'un contre l'autre.

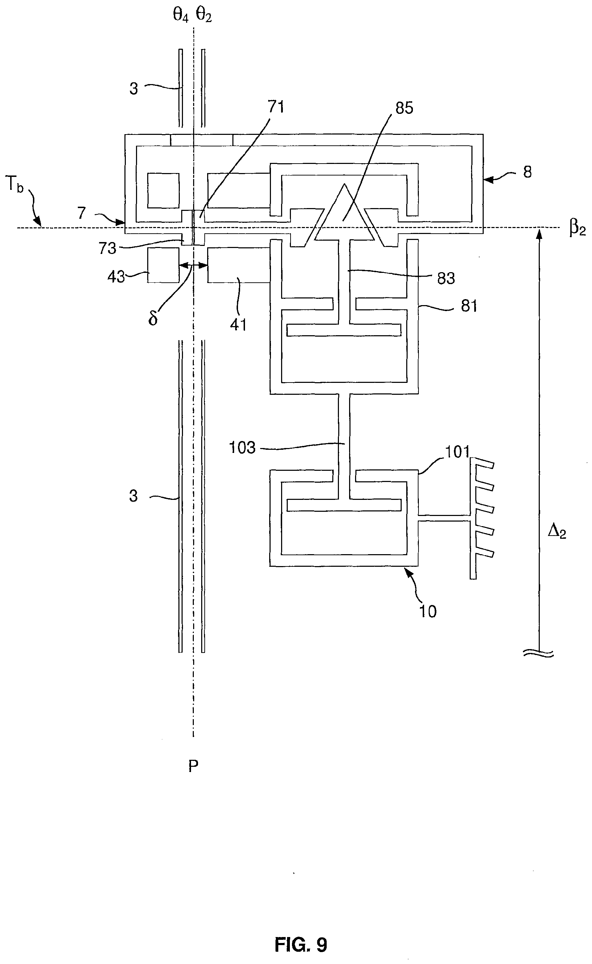

Figure 9, les deux outils de blocage 71, 73 se sont déplacés dans leur position finale β₂ pour laquelle la distance suivant le plan de guidage entre la direction de blocage T_{b} et la position fixe des moyens de réacheminement est égale à Δ₂. Les moyens dévétisseurs 41, 43 se sont également déplacés en bloc avec les outils de blocage 71, 73 en translation suivant le plan de guidage P.

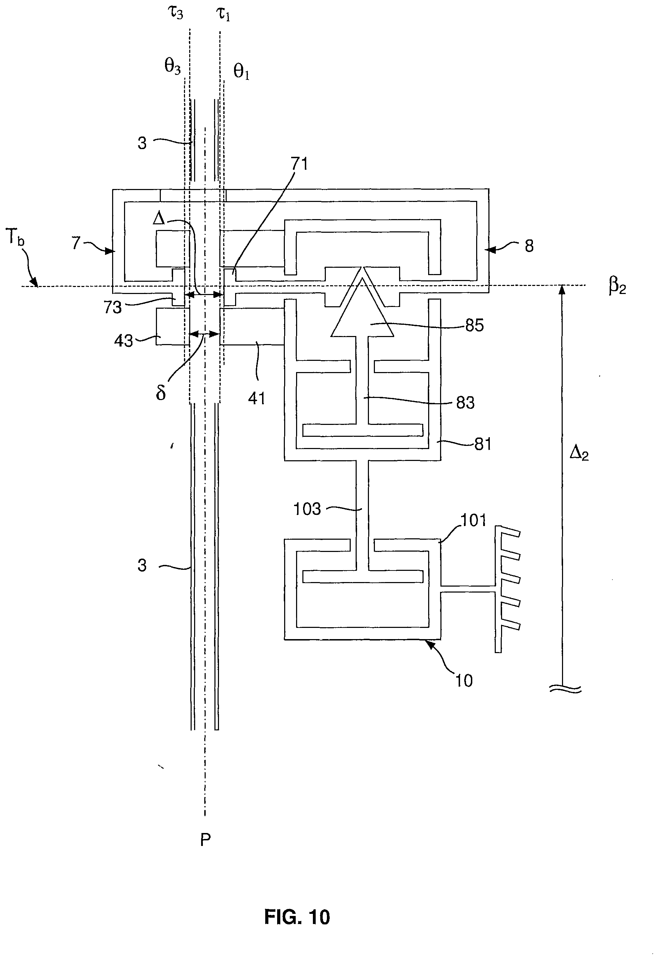

Figure 10, les deux outils de blocage 71, 73 sont restés dans la position finale β₂ illustrée par la figure 9 mais se sont déplacés, suivant la direction de blocage T_{b}, de leurs positions actives θ₂, θ₄ aux positions inactives θ₁, θ₃ pour lesquelles ils sont en retrait vis-à-vis des positions τ₁, τ₃ des moyens dévétisseurs 41, 43.

Dans le mode de réalisation qui vient d'être décrit, le premier outil de coupe 51 comprend une première lame pourvue d'un biseau 56 définissant un premier bord de coupe 52 et le deuxième outil de coupe 53 comprend une deuxième lame pourvue d'un biseau 58 et définissant un deuxième bord de coupe 54. Les premier et deuxième bords de coupe 52, 54 forment entre eux un angle de coupe φ et lesdits biseaux 56, 58 sont opposés pour permettre un chevauchement desdits bords de coupe 52, 54 et propager un point de coupe au sommet de l'angle de coupe φ, pendant un intervalle de temps défini par un instant initial et un instant final, correspondant respectivement aux positions inactives κ₁, κ₃ et aux positions actives κ₂, κ₄ des lames 51, 53 suivant la direction de coupe T_{c}.

La première lame 51 est fixée sur un premier porte-lame 57. La deuxième lame 53 est fixée sur un deuxième porte-lame 59 par l'intermédiaire d'une pièce 55 pivotant par rapport audit deuxième porte-lame 59 autour d'un axe 50 et est pressée contre le premier porte-lame 57 par un moyen de rappel élastique pour contrôler le jeu nécessaire au chevauchement des bords de coupe 52, 54 des lames 51, 53. Le moyen de rappel élastique est par exemple un ressort monté autour d'une vis 4 traversant la pièce intermédiaire 55 pour se visser dans le deuxième porte-lame 59, le ressort étant disposé entre la tête de vis et la pièce intermédiaire. Selon une variante de réalisation, la deuxième lame est sollicitée élastiquement en appui directement contre la première lame, soit à plat, soit par son bord de coupe contre la première lame, par exemple selon le principe de montage décrit dans la demande WO 2017/072421 précitée.

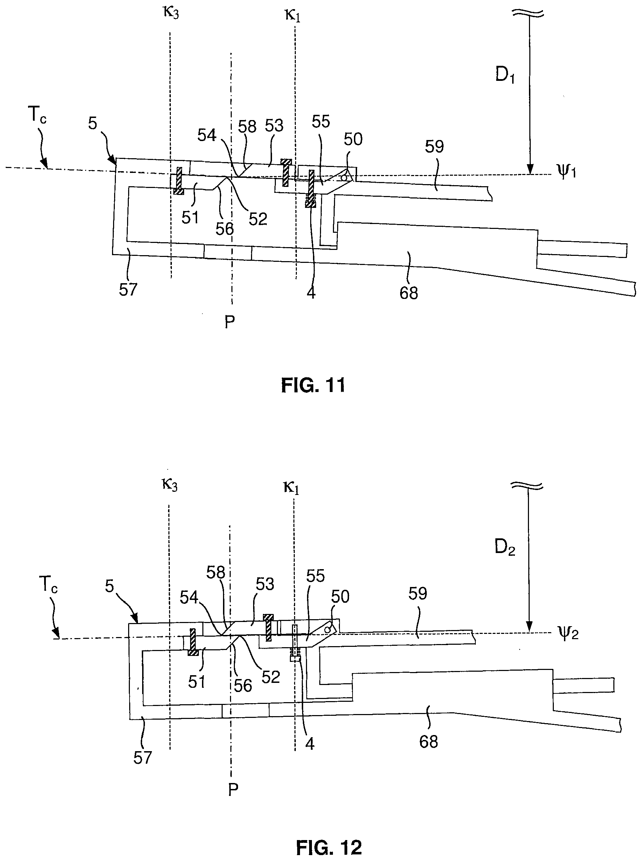

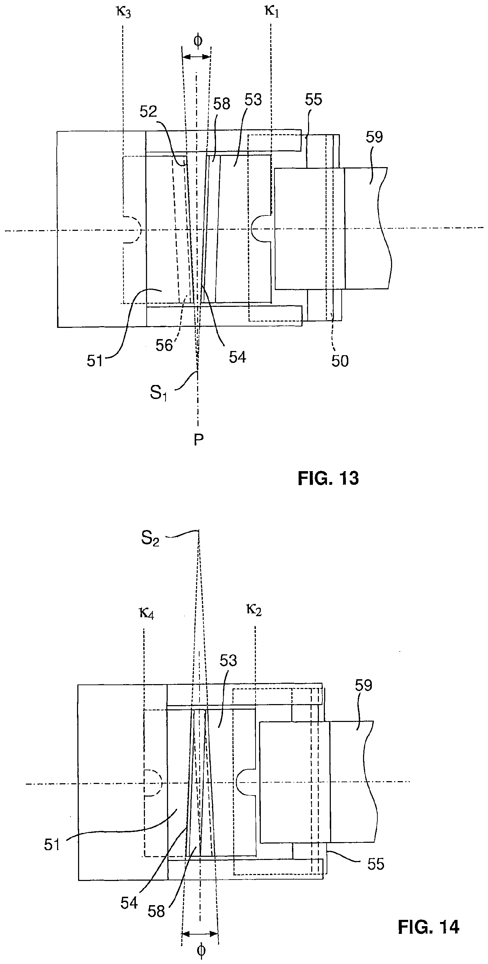

Figures 11 et 13, les première et deuxième lames 51, 53 sont dans leurs positions inactives κ₁, κ₃ suivant la direction de coupe T_{c}. Le sommet de l'angle de coupe φ occupe une position initiale S₁ déterminée par lesdites positions inactives κ₁, κ₃ pour lesquelles les bords de coupe 52, 54 des biseaux 56, 58 ne sont pas chevauchés.

Figures 12 et 14, les première et deuxième lames 51, 53 se sont déplacées dans leurs positions actives κ₂, κ₄ suivant la direction de coupe T_{c}. Le sommet de l'angle de coupe φ occupe une position finale S₂ déterminée par lesdites positions actives κ₂, κ₄ pour lesquelles les bords de coupe 52, 54 des biseaux 56, 58 sont chevauchés.

Entre les positions inactives κ₁, κ₃ et actives κ₂, κ₄, le sommet S₁, S₂ de l'angle de coupe φ s'est propagé au fur et à mesure que le chevauchement des bords de coupe 52, 54 s'est accentué.

Les bords de coupe 52, 54 sont rectilignes et forment un angle de coupe φ constant, des positions inactives κ₁, κ₃ aux positions actives κ₂. La bissectrice de l'angle de coupe φ est perpendiculaire à la direction de coupe T_{c}. Sur les figures 13 et 14, les positions inactives κ₁, κ₃ et actives κ₂, κ₄ sont avantageusement choisies de façon symétrique par rapport au plan de guidage P pour que la bissectrice de l'angle de coupe φ soit confondue avec la trace du plan de guidage P.

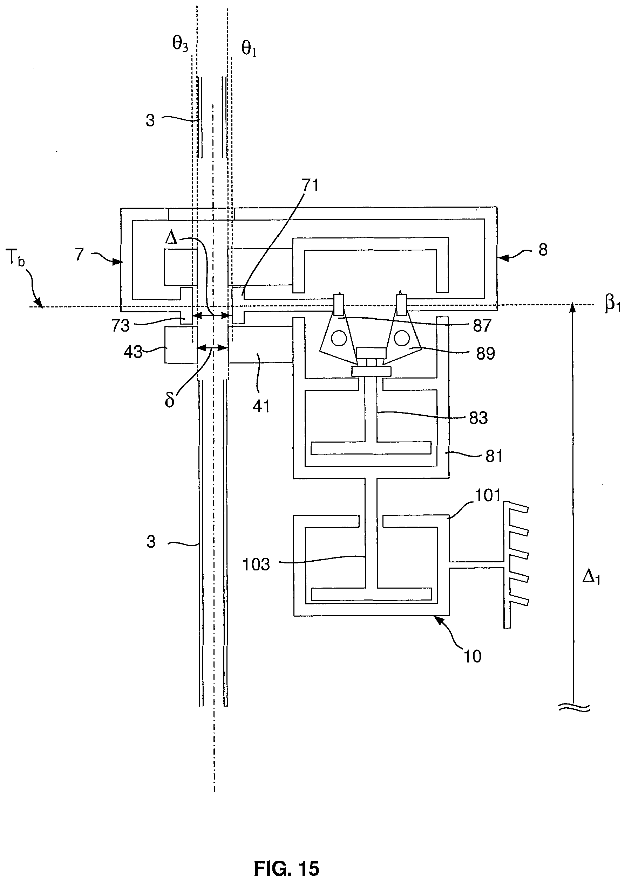

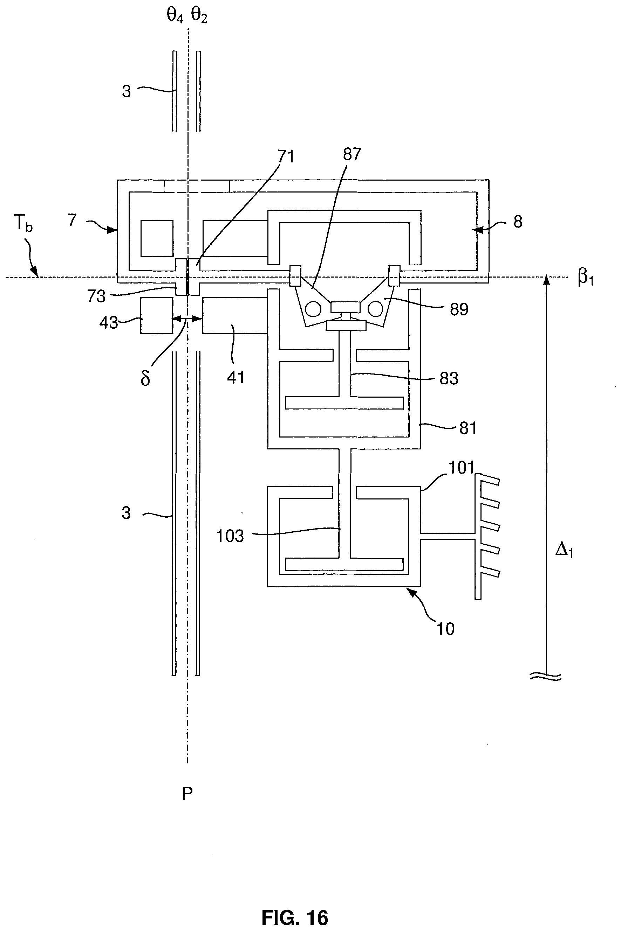

Une variante de réalisation du moyen de commande 8 des moyens de blocage 71, 73 tient en ce que la tige 83 du vérin 81 coopère avec les premier et deuxième moyens de blocage 71, 73 par l'intermédiaire de premier 87 et deuxième 89 leviers articulés auxdits moyens de blocage. Le vérin 81 est un vérin de type à pinces parallèles. Il permet avantageusement des démultiplier les efforts de blocage. Figure 15, la tige 83 est en position rentrée et commande les moyens de blocage 71, 73 dans leurs positions inactives θ₁, θ₃ suivant la direction de blocage T_{b}. Figure 16, la tige 83 est en position sortie et commande les moyens de blocage 71, 73 dans leurs positions actives θ₂, θ₄ suivant la direction de blocage T_{b}.

Un deuxième mode de réalisation de l'invention se distingue du précédent en ce que ledit premier moyen de commande des outils de coupe 51, 53 est un moyen de commande en translation suivant le plan de guidage P. Ce moyen de commande est analogue au moyen de commande 10 des premier et deuxième outils de blocage en bloc, en translation suivant le plan de guidage et décrit en référence aux figures 7 à 10.

Un moyen apte à déplacer lesdits outils de coupe 51, 53 l'un et l'autre suivant la direction de coupe T_{c} entre les positions respectives inactives κ₁, κ₃ et actives κ₂, κ₄ comprend un vérin actionnant une tige de vérin coopérant avec lesdits outils de coupe par l'intermédiaire d'un cône de transmission ou de premier et deuxième leviers reliés respectivement auxdits premier et deuxième outils de coupe. Il est analogue au moyen de commande 8 des premier et deuxième outils de blocage en translation suivant la direction de blocage et décrit en référence aux figures 7 à 10 ou aux figures 15 à 16.

La tête d'application selon l'invention est spécialement conçue pour être installée dans une machine de placement de fibres pour la réalisation de pièces en matériaux composites.

Une fibre 2 est appliquée sur un support (non représenté) par le rouleau d'application 1 au fur et à mesure du déplacement de la tête d'application par rapport audit support. La fibre est guidée par les moyens de guidage dans le plan de guidage P.

Une opération de « coupe à la volée » comprend les étapes suivantes :
- première étape : figure 1, en cours de drapage, la fibre 2 circule librement à travers les outils de coupe 51, 53 et les outils de blocage 71, 73. Les positions inactives κ₁, κ₃ des moyens de coupe, figure 5, définissent un état au repos suivant la direction de coupe T_{c}. De même, les positions inactives θ₁, θ₃ des moyens de blocage, figure 7, définissent un état au repos suivant la direction de blocage T_{b}.
- deuxième étape : figure 2, la fibre 2 est coupée par les outils de coupe 51, 53 et bloquée par les outils de blocage 71, 73. Les positions actives κ₂, κ₄ des outils de coupe, figure 6, définissent un état actif suivant la direction de coupe T_{c}. De même, les positions actives θ₂, θ₄ des outils de blocage, figure 8, définissent un état actif suivant la direction de blocage T_{b}.

Entre les première et deuxième étapes, les outils de coupe 51, 53 ont subi, suivant le plan de guidage P, la variation positive de distance D₂ - D₁. Cette variation permet de déplacer la direction de coupe T_{c} en même temps que la fibre 2 et conduit ainsi à annuler l'inclinaison de l'extrémité coupée de ladite fibre.

Les positions inactives κ₁, κ₃ suivant la direction de coupe T_{c} sont symétriques par rapport au plan de guidage P et les outils de coupe 51, 53 sont déplacés vers leurs positions actives κ₂, κ₄ à une même vitesse de translation. Ainsi, on parvient à couper la fibre 2 « au milieu », c'est-à-dire sans déviation par rapport au plan de guidage P.

De même, les positions inactives θ₁, θ₃ suivant la direction de blocage T_{b} sont symétriques par rapport au plan de guidage P et les outils de blocage 71, 73 sont déplacés vers leurs positions actives θ₂, θ₄ à une même vitesse de translation. Ainsi, on parvient à bloquer la fibre 2 « au milieu », c'est-à-dire sans déviation par rapport au plan de guidage P.
- troisième étape : figure 3, les outils de coupe 51, 53 restent dans l'état actif. De même, les outils de blocage 71, 73 restent dans l'état actif.

Entre les deuxième et troisième étapes, les outils de blocage 71, 73 ont subi, suivant le plan de guidage P, la variation positive de distance Δ₂ - Δ₁. Cette variation permet de déplacer la fibre 2 coupée et bloquée, en sens contraire au sens de défilement imposé par le sens de rotation du rouleau d'application 1.
- quatrième étape : figure 4, les outils de coupe 51, 53 sont à nouveau dans l'état au repos. Les outils de blocage 71, 73 restent dans l'état actif.

Entre les troisième et quatrième étapes, les outils de coupe 51, 53 ont subi, suivant le plan de guidage P, la variation négative de distance D₁ - D₂. La variation de distance Δ₂ - Δ₁ des outils de blocage 71, 73 est choisie supérieure à la variation de distance D₂ - D₁ des outils de coupe pour permettre le retour de ces derniers à la distance D₁ des moyens de réacheminent 9 sans risquer d'entrer en contact avec la fibre 2.
- cinquième étape : les outils de blocage 71, 73 sont à nouveau dans l'état au repos. Les outils de coupe 51, 53 restent dans l'état au repos. La fibre 2 circule librement après avoir été réacheminée par les moyens de réacheminent.

Entre la cinquième étape et la première étape de la prochaine coupe à la volée, les outils de bocage 71, 73 subiront, suivant le plan de guidage P, la variation négative de distance Δ₁ - Δ₂.

L'opération de coupe « à la volée » décrite ci-dessus peut être exécutée avec une tête d'application dans laquelle un seul des deux outils de coupe est mobile en translation suivant la direction de coupe, l'autre outil occupant une position fixe suivant ladite direction. Le document WO 2008/132301 décrit par exemple une lame mobile venant, dans la position active, en butée contre un contre-outil fixe suivant la direction de coupe, formé d'une barre en matériau élastomère.

De même, l'opération de coupe « à la volée » peut être exécutée avec une tête d'application dans laquelle un seul des deux outils de blocage est mobile en translation suivant la direction de blocage, l'autre outil occupant une position fixe suivant ladite direction. Le document WO 2008/132301 ou le document EP 846551 décrit un mors mobile venant, dans la position active, en butée contre un contre-outil fixe suivant la direction de blocage.

## Revendications

1. Tête d'application spécialement conçue pour réaliser des pièces en matériaux composites, comprenant un système d'application (1), des moyens de guidage (3) définissant un plan de guidage (P), un système de coupe (5) et un système de blocage (7), le système de coupe comprenant un premier outil de coupe (51) mobile en translation suivant une direction de coupe (T_{c}) et un deuxième outil de coupe (53), le système de blocage comprenant un premier outil de blocage (71) mobile en translation suivant une direction de blocage (T_{b}) et un deuxième outil de blocage (73), **caractérisée en ce qu'**elle comprend un premier moyen de commande (6) apte à déplacer lesdits outils de coupe (51, 53) ensemble entre des positions de coupe initiale et finale (ψ₁, ψ₂) représentant une variation de distance (D₂ - D₁) suivant le plan de guidage (P) et comprend un deuxième moyen de commande (10), distinct du premier moyen de commande, apte à déplacer lesdits outils de blocage (71, 73) ensemble entre des positions de blocage initiale et finale (β₁, β₂) représentant une variation de distance (Δ₂ - Δ₁) suivant le plan de guidage (P).

2. Tête d'application selon la revendication 1, **caractérisée en ce que** ledit premier moyen de commande est un moyen de commande intégré (6) apte à déplacer le premier (51) outil de coupe suivant la direction de coupe (T_{c}) et à déplacer ensemble lesdits outils (51, 53) entre lesdites positions initiale et finale (ψ₁, ψ₂).

3. Tête d'application selon la revendication 2, **caractérisée en ce que** le moyen de commande intégré (6) est apte à déplacer le premier outil de coupe (51) et le deuxième outil de coupe en translation suivant la direction de coupe (Tc) entre des positions inactives et des positions actives.

4. Tête d'application selon la revendication 3, **caractérisée en ce que** le moyen intégré (6) comprend un levier de commande (61) mobile autour d'un premier axe de rotation (A1) et pourvu d'un premier bras de levier (63) articulé à un premier porte-outil (57) porteur du premier outil de coupe (51) et d'un deuxième bras de levier (65, 66) articulé, par l'intermédiaire d'une biellette (69), à un deuxième porte-outil (59) porteur du deuxième outil de coupe (53), ledit deuxième bras de levier (65 , 66) étant commandé en déplacement par une tige de vérin (67), ledit premier porte-lame (57) étant articulé à un deuxième axe de rotation (A2) par l'intermédiaire d'une biellette (60) et lesdits premier et deuxième porte-outils (57, 59) étant reliés entre eux par un moyen de liaison (68) en coulissement suivant la direction de coupe (T_{c}).

5. Tête d'application selon l'une des revendications 1 à 4, **caractérisée en ce que** le premier outil de coupe (51) comprend une première lame pourvue d'un biseau (56) définissant un premier bord de coupe (52) et le deuxième outil de coupe (53) comprend une deuxième lame pourvue d'un biseau (58) définissant un deuxième bord de coupe (54), lesdits biseaux (56, 58) étant opposés pour permettre un chevauchement desdits bords de coupe (52, 54).

6. Tête d'application selon l'une des revendications 1 à 5, **caractérisée en ce que** ledit deuxième moyen de commande (10) des outils de blocage (71, 73) est un moyen de commande en translation suivant le plan de guidage (P).

7. Tête d'application selon l'une des revendications 1 à 6, **caractérisée en ce que** le système de blocage comprend un troisième moyen de commande (8) apte à déplacer un premier outil de blocage (71) suivant une direction de blocage (T_{b}).

8. Tête d'application selon la revendication 7, **caractérisée en ce que** les premier et deuxième outils de blocage (71, 73) sont mobiles l'un et l'autre suivant la direction de blocage (T_{b}) entre des positions respectives inactive (θ₁, θ₃) et actives (θ₂, θ₄), ledit troisième moyen de commande est apte à déplacer le premier outil de blocage et le deuxième outil de blocage en translation suivant la direction de coupe (Tc) entre les positions inactives et les positions actives.

9. Tête d'application selon la revendication 8, **caractérisée en ce qu'**elle comprend des moyens dévétisseurs (41, 43) fixes suivant la direction de blocage (Tb) dans des positions (τ₁, τ₃) vis-à-vis desquelles lesdites positions inactives respectives (θ₁, θ₃) des outils de blocage (71, 73) sont en retrait, les moyens dévétisseurs comprennent deux plaques de dévétissage (41, 43) chacune munie d'un trou traversant (411, 431) pour le passage d'un mors (71, 73), les deux surfaces en vis-à-vis des plaques de dévétissage sont espacées l'une de l'autre et sont dans des positions (τ₁, τ₃) vis-à-vis desquelles les positions inactives (θ₁, θ₃) des mors sont en retrait.

10. Tête d'application selon la revendication 9, **caractérisée en ce que** ledit deuxième moyen (10) de commande apte à déplacer ensemble lesdits outils de blocage (71, 73) est également apte à déplacer les moyens dévétisseurs (41, 43), en translation suivant le plan de guidage (P).

11. Procédé de fabrication d'une pièce en matériau composite comprenant l'application de fibres continues sur une surface d'application, **caractérisé en ce que** l'application de fibres est réalisée au moyen d'une tête d'application de fibres selon l'une des revendications 1 à 10, par déplacement relatif de la tête d'application par rapport à la surface de drapage selon des trajectoires de dépose.

## Patentansprüche

1. Auftragskopf, der speziell für die Herstellung von Teilen aus Verbundwerkstoffen konzipiert ist, umfassend ein Auftragssystem (1), Führungsmittel (3), die eine Führungsebene (P) definieren, ein Schneidsystem (5) und ein Blockiersystem (7), wobei das Schneidsystem ein erstes Schneidwerkzeug (51), das gemäß einer Schneidrichtung (T_{c}) translationsbeweglich ist, und ein zweites Schneidwerkzeug (53) umfasst, wobei das Blockiersystem ein erstes Blockierwerkzeug (71), das gemäß einer Blockierrichtung (T_{b}) translationsbeweglich ist, und ein zweites Blockierwerkzeug (73) umfasst, **dadurch gekennzeichnet, dass** er ein erstes Steuermittel (6) umfasst, das imstande ist, die Schneidwerkzeuge (51, 53) zusammen zwischen Start- und Endschneidpositionen (ψ₁, ψ₂) zu bewegen, was eine Distanzvariation (D₂ - D₁) gemäß der Führungsebene (P) darstellt, und ein zweites Steuermittel (10) umfasst, das vom ersten Steuermittel verschieden ist, imstande, die Blockierwerkzeuge (71, 73) zusammen zwischen Start- und Endblockierpositionen (β₁, β₂) zu bewegen, was eine Distanzvariation (Δ₂ - Δ₁) gemäß der Führungsebene (P) darstellt.

2. Auftragskopf nach Anspruch 1, **dadurch gekennzeichnet, dass** das erste Steuermittel ein integriertes Steuermittel (6) ist, das imstande ist, das erste (51) Schneidwerkzeug gemäß der Schneidrichtung (T_{c}) zu bewegen und die Werkzeuge (51, 53) zusammen zwischen den Start- und Endpositionen (ψ₁, ψ₂) zu bewegen.

3. Auftragskopf nach Anspruch 2, **dadurch gekennzeichnet, dass** das integrierte Steuermittel (6) imstande ist, das erste Schneidwerkzeug (51) und das zweite Schneidwerkzeug in Translation gemäß der Schneidrichtung (Tc) zwischen inaktiven Positionen und aktiven Positionen zu bewegen.

4. Auftragskopf nach Anspruch 3, **dadurch gekennzeichnet, dass** das integrierte Mittel (6) einen Steuerhebel (61) umfasst, der um eine erste Drehachse (A1) beweglich ist und mit einem ersten Hebelarm (63) versehen ist, der an einem ersten Werkzeughalter (57) angelenkt ist, der das erste Schneidwerkzeug (51) trägt, und mit einem zweiten Hebelarm (65, 66), der mittels eines Gestänges (69) an einem zweiten Werkzeughalter (59) angelenkt ist, der das zweite Schneidwerkzeug (53) trägt, wobei der zweite Hebelarm (65, 66) von einer Zylinderstange (67) bewegungsgesteuert wird, wobei der erste Klingenhalter (57) an einer zweiten Drehachse (A2) mittels eines Gestänges (60) angelenkt ist und der erste und zweite Werkzeughalter (57, 59) durch ein Verbindungsmittel (68), das gemäß der Schneidrichtung (T_{c}) gleitet, miteinander verbunden sind.

5. Auftragskopf nach einem der Ansprüche 1 bis 4, **dadurch gekennzeichnet, dass** das erste Schneidwerkzeug (51) eine erste Klinge umfasst, die mit einer Abschrägung (56) versehen ist, die eine erste Schneidkante (52) definiert, und das zweite Schneidwerkzeug (53) eine zweite Klinge umfasst, die mit einer Abschrägung (58) versehen ist, die eine zweite Schneidkante (54) definiert, wobei die Abschrägungen (56, 58) gegenüberliegen, um ein Überlappen der Schneidkanten (52, 54) zu ermöglichen.

6. Auftragskopf nach einem der Ansprüche 1 bis 5, **dadurch gekennzeichnet, dass** das zweite Steuermittel (10) der Blockierwerkzeuge (71, 73) ein Steuermittel in Translation gemäß der Führungsebene (P) ist.

7. Auftragskopf nach einem der Ansprüche 1 bis 6, **dadurch gekennzeichnet, dass** das Blockiersystem ein drittes Steuermittel (8) umfasst, das imstande ist, ein erstes Blockierwerkzeug (71) gemäß einer Blockierrichtung (T_{b}) zu bewegen.

8. Auftragskopf nach Anspruch 7, **dadurch gekennzeichnet, dass** die ersten und zweiten Blockierwerkzeuge (71, 73) beide gemäß der Blockierrichtung (T_{b}) zwischen jeweiligen inaktiven (θ₁, θ₃) und aktiven Positionen (θ₂, θ₄) beweglich sind, wobei das dritte Steuermittel imstande ist, das erste Blockierwerkzeug und das zweite Blockierwerkzeug in Translation gemäß der Schneidrichtung (Tc) zwischen den inaktiven Positionen und den aktiven Positionen zu bewegen.

9. Auftragskopf nach Anspruch 8, **dadurch gekennzeichnet, dass** er feste Abstreifmittel (41, 43) gemäß der Blockierrichtung (Tb) in Positionen (τ₁, τ₃) umfasst, gegenüber welchen die jeweiligen inaktiven Positionen (θ₁,θ₃) der Blockierwerkzeuge (71, 73) zurückspringend sind, wobei die Abstreifmittel zwei Abstreifplatten (41, 43) umfassen, die jeweils mit einem Durchgangsloch (411, 431) für den Durchgang einer Backe (71, 73) ausgestattet sind, wobei die zwei gegenüberliegenden Flächen der Abstreifplatten voneinander beabstandet sind und sich in Positionen (τ₁, τ₃) befinden, gegenüber welchen die inaktiven Positionen (θ₁, θ₃) der Backen zurückspringend sind.

10. Auftragskopf nach Anspruch 9, **dadurch gekennzeichnet, dass** das zweite Steuermittel (10), das imstande ist, die Blockierwerkzeuge (71, 73) zusammen zu bewegen, ebenfalls imstande ist, die Abstreifmittel (41, 43) in Translation gemäß der Führungsebene (P) zu bewegen.

11. Verfahren zur Fertigung eines Teils aus Verbundwerkstoff, umfassend das Auftragen von Endlosfasern auf eine Auftragsoberfläche, **dadurch gekennzeichnet, dass** das Auftragen von Fasern mittels eines Faserauftragskopfs nach einem der Ansprüche 1 bis 10 durch eine relative Bewegung des Auftragskopfs in Bezug auf die Drapieroberfläche gemäß Ablagebahnen ausgeführt wird.

## Claims

1. Application head especially designed for producing composite material parts, comprising an application system (1), guiding means (3) defining a guiding plane (P), a cutting system (5) and a clamping system (7), the cutting system comprising a first cutting tool (51) movable in translation along a cutting direction (T_{c}) and a second cutting tool (53), the clamping system comprising a first clamping tool (71) movable in translation along a clamping direction (T_{b}) and a second clamping tool (73), **characterized in that** it comprises a first control means (6) able to displace said cutting tools (51, 53) together between initial and final cutting positions (ψ₁, ψ₂) representing a variation in distance (D₂ - D₁) along the guiding plane (P) and comprises a second control means (10), distinct from the first control means, able to displace said clamping tools (71, 73) together between initial and final clamping positions (β₁, β₂) representing a variation in distance (Δ₂ - Δ₁) along the guiding plane (P).

2. Application head according to claim 1, **characterized in that** said first control means is an integrated control means (6) able to displace the first (51) cutting tool along the cutting direction (T_{c}) and to displace together said tools (51, 53) between said initial and final positions (ψ₁, ψ₂).

3. Application head according to claim 2, **characterized in that** the integrated control means (6) is able to displace the first cutting tool (51) and the second cutting tool in translation along the cutting direction (Tc) between inactive positions and active positions.

4. Application head according to claim 3, **characterized in that** the integrated control means (6) comprises a control lever (61) movable around a first rotation axis (A1) and provided with a first lever arm (63) articulated to a first tool holder (57) carrying the first cutting tool (51) and a second lever arm (65, 66) articulated, by means of a link (69), to a second tool holder (59) carrying the second cutting tool (53), said second lever arm (65, 66) being controlled in displacement by a cylinder rod (67), said first blade holder (57) being articulated to a second rotation axis (A2) by means of a link (60) and said first and second tool holders (57, 59) being connected together by a sliding connecting means (68) for sliding along the cutting direction (T_{c}).

5. Application head according to one of claims 1 to 4, **characterized in that** the first cutting tool (51) comprises a first blade provided with a bevel (56) defining a first cutting edge (52) and the second cutting tool (53) comprises a second blade provided with a bevel (58) defining a second cutting edge (54), said bevels (56, 58) being opposed to allow an overlapping of said cutting edges (52, 54).

6. Application head according to one of claims 1 to 5, **characterized in that** said second control means (10) for the clamping tools (71, 73) is a control means for controlling in translation along the guide plane (P).

7. Application head according to one of claims 1 to 6, **characterized in that** the clamping system comprises a third control means (8) able to displace a first clamping tool (71) along a clamping direction (T_{b}).

8. Application head according to claim 7, **characterized in that** the first and second clamping tools (71, 73) are both movable along the clamping direction (T_{b}) between respective inactive positions (θ₁, θ₃) and active positions (θ₂, θ₄), said third control means being able to displace the first clamping tool and the second clamping tool in translation along the cutting direction (Tc) between the inactive positions and the active positions.

9. Application head according to claim 8, **characterized in that** it comprises stripper means (41, 43) fixed along the clamping direction (T_{b}) in positions (τ₁, τ₃) with respect to which said respective inactive positions (θ₁, θ₃) of the clamping tools (71, 73) are set back, the stripper means comprise two stripping plates (41, 43) each provided with a through hole (411, 431) for the passage of a jaw (71, 73), the two facing surfaces of the stripping plates are spaced apart from each other and are in positions (τ₁, τ₃) with respect to which the inactive positions (θ₁, θ₃) of the jaws are set back.

10. Application head according to claim 9, **characterized in that** said second control means (10) able to displace said clamping tools (71, 73) together is also able to displace the stripper means (41, 43) in translation along the guide plane (P).

11. Method for manufacturing a composite material part comprising the application of continuous fibers to an application surface, **characterized in that** the application of fibers is carried out by means of a fiber application head according to one of claims 1 to 10, by relative displacement of the application head with respect to the layup surface along layup trajectories.
